(19) Europäisches Patentamt
European Patent Office
Office européen des brevets

(11) **EP 1 497 392 B1**

(12) **EUROPEAN PATENT SPECIFICATION**

(45) Date of publication and mention
of the grant of the patent:
**29.05.2013 Bulletin 2013/22**

(51) Int Cl.:
*C09K 11/02* (2006.01)     *H05B 33/04* (2006.01)
*H05B 33/10* (2006.01)     *H05B 33/20* (2006.01)

(21) Application number: **03718333.2**

(22) Date of filing: **10.04.2003**

(86) International application number:
**PCT/US2003/011150**

(87) International publication number:
**WO 2003/087257 (23.10.2003 Gazette 2003/43)**

(54) **HYDRO-INSENSITIVE ELECTROLUMINESCENT DEVICES AND METHODS OF MANUFACTURE THEREOF**

HYDRO-UNEMPFINDLICHE ELEKTROLUMINESZENTE VORRICHTUNGEN UND VERFAHREN ZU DEREN HERSTELLUNG

DISPOSITIFS ELECTROLUMINESCENTS INSENSIBLES A L'EAU ET PROCEDE DE PRODUCTION ASSOCIE

(84) Designated Contracting States:
**AT BE BG CH CY CZ DE DK EE ES FI FR GB GR HU IE IT LI LU MC NL PT RO SE SI SK TR**

(30) Priority: **10.04.2002  US 371375 P**
**19.08.2002  US 404420 P**

(43) Date of publication of application:
**19.01.2005  Bulletin 2005/03**

(73) Proprietor: **FLEXCON COMPANY INC.**
**Spencer,**
**Massachusetts 01562 (US)**

(72) Inventors:
• **MCDONOUGH, Neil**
**Worcester, MA 01609 (US)**
• **SEGALL, Daniel, P.**
**Longmeadow, MA 01106 (US)**
• **HILTON, Iris, E.**
**Charlton, MA 01507 (US)**
• **PENNACE, John, R.**
**Paxton, MA 01612 (US)**

(74) Representative: **Hammond, Andrew David et al**
**Valea AB**
**Lindholmspiren 5**
**417 56 Göteborg (SE)**

(56) References cited:
**US-A- 4 687 968     US-B1- 6 432 516**

• **DATABASE WPI Section Ch, Week 200067 Derwent Publications Ltd., London, GB; Class A85, AN 2000-682107 XP002246160 & JP 2000 260561 A (TOSHIBA KK), 22 September 2000 (2000-09-22)**
• **DATABASE WPI Section Ch, Week 199512 Derwent Publications Ltd., London, GB; Class A14, AN 1995-085688 XP002246161 & JP 07 011247 A (IDEMITSU KOSAN CO LTD), 13 January 1995 (1995-01-13)**

**Description**

**PRIORITY INFORMATION**

The present application claims priority to U.S. Provisional Patent Applications Ser. Nos. 60/371,375 filed April 10, 2002, and 60/404,420 filed August 19, 2002.

**BACKGROUND OF THE INVENTION**

The invention relates to luminescent materials and relates in particular to electro-luminescent devices that include luminescent materials.

Electroluminescent materials generally include phosphorescent particles that are suspended within or coated by a polymeric material. Electroluminescent devices typically provide an electric field in the area of the phosphorescent particles to cause the particles to glow. Such devices may be used for a wide variety of uses such as advertising, lighted keyboards and other such displays, accent lighting in automobiles, backlighting for liquid crystals displays, nightlights, etc.

Such devices typically include a protective layer that used to keep water vapor from entering the polymeric material. For example, Patent No. U.S. 6,207,077 discloses a luminescent thermosetting polyester blend that is water resistant; and U.S.

Patent No. 6,198,216 discloses a polymeric matrix that includes luminescent particles and a fluoride resin binder as well as protective layer. Because the dielectric properties and chemical properties of such luminescent materials typically rely on the exclusion of water vapor, devices incorporating such luminescent materials typically include a moisture barrier. Such moisture barriers may be relatively expensive for certain devices, and may limit the uses of such devices.

US 4 687 968 describes a barrier for an electroluminescent lamp having a phosphor-particle-containing layer disposed between corresponding electrodes consists of an integral multilayer polymeric film. A first layer of barrier material is interally bonded in face-to-face contact with the exposed outer surface of the lamp body and the material has a characteristic vapor transmission rate significantly below the vapor transmission rate of the material of the lamp body. A second layer of barrier material is integrally bonded in face-to face contact with the first barrier layer and the material has a vapor transmission rate significantly greater than the vapoer transmission rate of the material of the first barrier layer. A third layer of barrier material is integrally bonded in face-to-face contact with the second barrier layer and the material has a vapor transmission rate significantly less than the vapor transmission rate of the material of the second barrier layer.

There is a need therefore, for an electroluminescent material whose performance is not dependent on the presence or absence of water vapor from the material.

**SUMMARY OF THE INVENTION**

A composite is disclosed for use in electroluminescent devices. The composite includes polymeric material having a first surface energy, and phosphorescent material dispersed within said polymeric material. The phosphorescent material has a second surface energy, and the first and second surface energies are each between 0.032 N/m (32 dynes/cm) and 0.046 N/m (46 dynes/cm). The polymeric material has a moisture vapor transmission rate of at least 0.000394 g/m$^2$ (one gram / 100 sq. inches) for a 24 hour period at 38 °C (100 °F) for a one mil thick barrier. Due to the relative matching of surface energies, water vapor does not substantially condense at the interfaces between the phosphorescent material and the polymeric material. Water vapor, therefore, may pass through the composite without adversely affecting the operation of an electroluminescent device that includes a composite of an embodiment of the invention.

**BRIEF DESCRIPTION OF THE DRAWING**

The following description may be further understood with reference to the accompanying drawings in which:

Figure 1 shows an illustrative diagrammatic view of an electroluminescent composite in accordance with an embodiment of the invention;
Figure 2 shows an illustrative diagrammatic view of an electroluminescent composite in accordance with another embodiment of the invention;
Figure 3 shows an illustrative diagrammatic view of an electroluminescent composite in accordance with a further embodiment of the invention;
Figure 4 shows an illustrative diagrammatic view of an electroluminescent composite in accordance with a further embodiment of the invention;

Figure 5 shows an illustrative diagrammatic view of a transferable electroluminescent composite in accordance with a further embodiment of the invention;

Figure 6 shows an illustrative diagrammatic view of an electroluminescent composite formed from the transferable electro-luminescent composite shown in Figure 5;

Figure 7 shows an illustrative diagrammatic view of a transferable conductive composite in accordance with a further embodiment of the invention; and

Figure 8 shows an illustrative diagrammatic view of an electroluminescent composite formed from the transferable conductive composite shown in Figure 7.

The drawings are shown for illustrative purposes and are not to scale.

## DETAILED DESCRIPTION OF THE INVENTION

The invention provides for the development of electroluminescent materials that may be inert to conditions of water vapor penetration and condensation. This permits the packaging of electroluminescent composites to not be required to be water vapor impermeable.

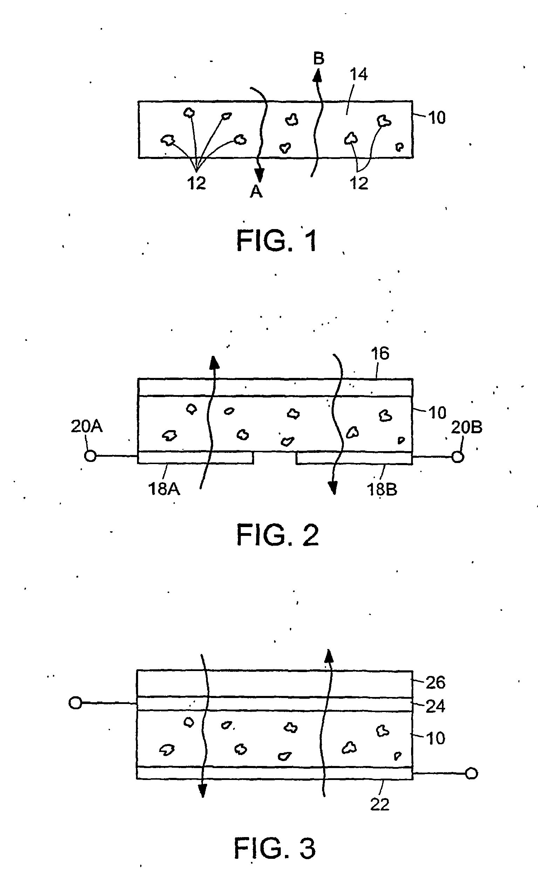

In accordance with an embodiment of the invention, an electroluminescent composite 10 may include phosphorescent particles 12 that are dispersed within a polymeric material 14 as shown in Figure 1. It is preferred that all of the phosphorescent particles be coated by the polymeric material, even near the surface of the composite. The polymeric material permits water vapor to pass through the polymeric material as indicated at A and B. The polymeric and phosphorescent particles are chosen so that the surface energies of each material are each within a range of 0.032 to 0.046 N/m (32 to 46 dynes/cm). Water vapor, therefore, will not condense at the interface between the polymeric material and the phosphorescent particles. Because of this, water vapor will not remain within the composite, and the presence or absence of water vapor therefore, will not substantially affect the performance of the composite when the composite is employed within an electroluminescence device. In various embodiments, the composite 10 may be provided as a product in itself, or may be provide with a carrier (that may or may not be removable) and/or may be provided with one or more adhesive layers on the outer surface of the composite.

In particular, an electroluminescent device using a composite 10 may also include a protective coating 16 and optionally may include a pair of conductors 18A and 18B that are respectively electrically coupled to alternating current sources 20A and 20B as shown in Figure 2. In other embodiments, the composite 10 and coating 16 may be placed onto conductors or buss bars at a point of application or use of the device. The protective coating 16 and conductors 18A and 18B have a sufficiently high moisture vapor transmission rate that water vapor may pass through these materials as well. In addition, the surface energies of each of protective coating 16 and conductors 18A and 18B are between 0.032 to 0.046 N/m (32 to 46 dynes/cm). Moreover, it is preferred that the difference between the surface energy of the polymeric material and the protective coating remain relatively small, and the difference between the surface energy of the protective coating and the conductors remain relatively small. Water vapor, therefore, will not condense at the interface between the polymeric material and the protective coating, or at the interface between the polymeric material and the conductors. Because of this, water vapor will not remain within the electroluminescent device, and the presence or absence of water vapor therefore, will not substantially affect the performance of the electroluminescence device.

The polymeric material may comprise a pressure sensitive acrylic adhesive films such polyester (PET), polymethylmethacrylate (PMMA), or a thermoplastic coating, polyamides, amorphous polyester resins, acrylic resins, or any other material that provides sufficient moisture vapor transmission and has an appropriate surface energy. It has been discovered that a phosphor to polymer ratios of 25/75 to 74/26 may be used in various embodiments. For example, a phosphor to polymer ratio of 55/45 may be used in certain embodiments. Again the properties of the continuous polymer layer should be such that the polymeric material has a low enough specific surface energy that water vapor does not condense at the interface of the phosphors and the polymer, polymer and conductive layer, or polymer and polymer layers, yet the layers may allow water vapor to move freely through the composite. The polymeric material preferably may include untreated polyvinyl chloride, or slip treated polyesters with specific surface energies of less than (46 dynes/cm) 0.046 N/m with preferred specific surface energies of less than 0.046 N/m (46 dynes /cm).

For the conductive material, indium tin oxide (InTO) may be used, having a surface energy of 0.036 N/m (36 dynes/cm). In other embodiments, lightly metallized conductive layers with a specific surface energy of 0.040 - 0.043 N/m (40 - 42 dynes/cm) may be used. It is preferred, however, that the surface energy be between 0.032 N/m and 0.040 N/m.

The following table identifies the surface energies and moisture vapor transmission rates of various materials that may be used in various embodiments of the invention.

Table 1

| Material | Specific Surface Energy $\left[\frac{N}{m} / \left(\text{dynes}\frac{}{cm}\right)\right]$ | MVTR $\left[\frac{g}{m^2} / \left(\text{gram mils}\frac{}{\text{sq. inches}}\right)\right]$ |
|---|---|---|
| Polyester | (41 - 44) 0.041-0.044 | (2.2) 0.0008668 |
| Polyester (amorphous) | (36 - 38) 0.036 - 0.038 | (2.6) 0.001024 |
| Polymethylmethacrylate (PMMA) | (41) 0.041 | (3) 0.001182 |
| Electroluminescent Phosphors | (35 - 40) 0.035 - 0.040 | n/a |
| Polycarbonate | (46) 0.046 | (11) 0.004334 |
| Polystyrene | (38) 0.038 | (8.5) 0.003349 |
| RigidPVC | (39) 0.039 | (3.0) 0.001182 |
| Silicone | (24 - 28) 0.024-0.028 | (40) 0.01576 |
| Acrylic pressure sensitive adhesives | (32 - 38) 0.032-0.038 | (15 - 40) 0.00511-0.01576 |

Materials having a surface energy below 0.032 N/m (32 dynes/cm) may have difficultly adhering to other materials in forming an electroluminescent device, although the use of silanes or other adhesion promoters may facilitate overcoming a low surface energy adhesion problem. In fact, the use of such a surface treatment (e.g., with silanes) may cause the specific or critical surface energy of the composite to be reduced. For example a coating of reactive silanes, such as a 3/1-ratio gamma glycidyoxypropyl trimethoxy silane to a propyl amino silane, in a concentration of 0.1 -5.0 % on weight in a dry (water free) solvent on the surface of a higher specific surface energy material such as Aluminum may reduce the surface energy to a non-condensing level (down to the low to mid0.030s N/m (30s dynes/cm)). It should be noted that such specific surface energy reductions, which prevent a condensation to water, may also be of value in preventing electrolytic corrosion of metals as the galvanic effect needs water to function. Further, the inclusion of a high moisture barrier as part of the dielectric matrix may have an adverse effect on the performance of an electroluminescent device of the invention. Such barriers may lead to an out-gassing effect (e.g., bubbles forming in the adhesive layer for example). Such "bubbles" once formed, change the "K" (dielectric constant) and change the separation between conductive layers, thus having an adverse effect on the total capacitance and thus the performance of the electro-luminescent device.

It is preferred that an electroluminescent device of the invention have no layer with an MVTR of less than 0.000394 g/m$^2$/ 24 hrs (1 gram mil/100sq. inches/24hrs) (Lyssy test at 38°C and 90% relative humidity), and that no two successive polymer layers differ by more than 0.002364 g/m$^2$/24 hrs (6 gram mil/100sq. inches/24hrs), and more preferably not differing by more than 0.001182 g/m$^2$/24 hrs (3-gram mil/100 sq. inches/24hrs). Further, the polymeric material should not have its dielectric value substantially changed by the presence of water vapor, particularly if the polymeric material has a relatively low surface energy level. For example a rubber-bped adhesive may show a reduction in dielectric constant of about 50% after 3 days at 38 °C(100° F) and 95% relative humidity. The increase in dielectric constant may result in a dielectric breakdown within the structure effectively shorting out of the device.

Devices of the invention may be coated or printed as desired in various applications in which the device will be coupled to a power supply. Again, there is no need to exclude water from the device, and in fact, it is preferred that water vapor be permitted to freely pass through each of the layers of the device. The devices may be tested for water sensitivity by placing the devices in a high humidity environment 38° C (100° F and about 100% relative humidity). The devices should then be periodically analyzed for illumination stability.

As shown in Figure 3, an electroluminescent device in accordance with another embodiment of the invention includes a pair of conductive layers 22 and 24 on either side of the composite 10, as well as a protective layer 26. The conductive layer 24 is preferably a transparent conductive layer such as InTO or a lightly metallized aluminum on the order of an optical density of between 0.07 - 1.0 and preferably between 0.15 and 0.30. In other embodiments, the transparent conductor layer may include conductive polymers or carbon nanotubes. The transparent conductive layer should include a sufficient concentration of conductive material such that the conductive layers' product of their resistance and capacitance (RC time constant) defines the frequency of the resistance capacitance layer, and this frequency should be higher than the frequency needed to illuminate the device. As the resistance of the electrically conductive material decreases, the capacitive impedance also decreases as does the total current that is needed to light the phosphors.

Similar to the previous embodiment, the protective layer 26 and conductive layers 22 and 24 have a sufficiently high moisture vapor transmission rate that water vapor may pass through these materials. In addition, the surface energies of each of protective coating 26 and conductive layers 22 and 24 are between 0.032 to 0.046 N/m (32 to 46 dynes/cm). Moreover, it is preferred that the difference between the surface energies of each pair of adjoining layer remain relatively small, preferably less than 6 dynes/cm. Water vapor, therefore, should not condense at any of the interfaces within the device, so water vapor will not remain within the electroluminescent device.

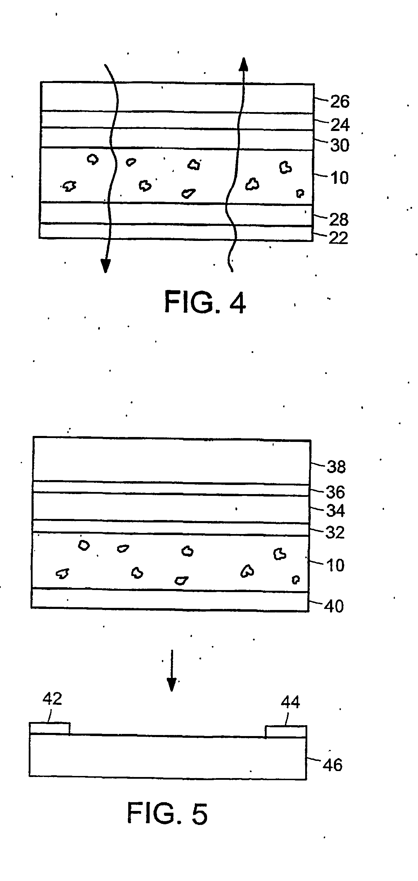

In further embodiments, the device may also include one or two additional dielectric layers 28 and 30 (e.g., between 0.02 - 0.5 mil) between the composite and either or both of the conductive layers to ensure that the phosphorescent particles do not contact directly a conductive layer as shown in Figure 4. The protective film 26 may further serve to protect persons from directly contacting any conductor or underlying buss bar or other alternating current source, and may also provide additional structural integrity to the device. Further, a clear protective film may be used to keep dust and scratches out and to lend further structural support for the electroluminescent device. Such films may include polyester, polyolefins, PVC, PVF, polycarbonate, etc. as long as the conditions for adhesion, surface energy and moisture vapor transmission rate are met.

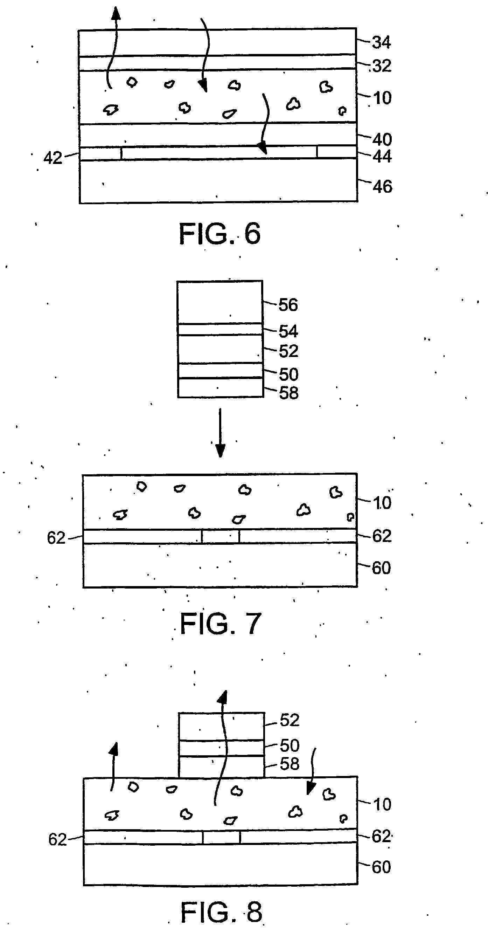

In accordance with yet another embodiment of the invention, a transfer component may be constructed such that thermal transfer printers, or a hot stamping machine may be used to place an electroluminescent composite on a graphic display (e.g., keys on a key board, instrument panel display, etc.). In particular, a transfer component may include a composite 10, a transparent conductive layer 32, a protective layer 34, a release layer 36 and a carrier layer 38, as well as an adhesive layer 40 on the opposite side of the composite 10 as shown in Figure 5. The transfer component may be applied to one or more conductors 42 and 44 on a graphic display 46 followed by removal of the carrier and release layers 36 and 38 as shown in Figure 6. In this process, the carrier layer 36 may serve to provide structural support to an otherwise frangible component that becomes transferred to the display 46. In certain embodiments, the polymeric material in composite 10 may include adhesive properties that a separate adhesive 40 is not required. Similarly, in certain embodiments, the conductive layer 32 may include sufficient protective properties that a separate protective coating 34 is not required. Further, the conductive layer may include a coating of a dielectric to ensure that no phosphorescent particles contact the conductive layer. The release layer or break coat layer may remain with the composite following transfer in certain embodiments and may itself serve as a protective layer in the final device. The "break coat" can, and sometimes does, also act as the "Protective Coating".

In still further embodiments, the transfer component may include a conductive layer 50 and a protective layer 52 in addition to the release layer 54, the carrier layer 56, and the adhesive layer, 58, but not a luminescent composite 10. In this case, the receiving substrate 60 including one or more conductors 62 (such as a display) would already include a luminescent composite 10. This process of transferring a conductive layer to a luminescent composite may permit discrete transfer of various desired indicia or other graphics that need not be coupled to directly to an alternating current power supply since their role is to bridge an existing gap in the receiving substrate. In certain embodiments, the composite 10 may provide sufficient adhesive, for example by including (of 1% to 45% and preferably 2% - 6 %) of an antistatic agent such as CYASTAT sold by Cytec Industries, Inc. of West Paterson, NJ:

Salt may also be employed as an alternating current receptor material in further embodiments of the invention. For example, employing such a material in the bonding adhesive that affixing the luminescent composite to a conductive substrate, may increase the field strength of the electroluminescent device. Alternating current voltages in the range of 100 volts - 2500 volts (and preferably between 400 volts and 30 800 volts) at a frequency of 60 Hz to 14000 Hz (and preferably between 1000 Hz and 5000 Hz) has been found to be effective in devices of the invention. The electrical potential and frequency may be varied for different applications based on, for example, the color desired, the size of the electroluminescent device, the total thickness of the electroluminescent material, the brightness, and the internal impendence and capacitance.

Generally, the higher the frequency, the lower the molecular weight of the salt needed to optimize the results. It has been discovered that salts such as these, which can be reasonably uniformly dispersed within a polymeric matrix, may facilitate the transfer an alternating current signal, which may complete the electroluminescent device circuit. The addition of these charge carrying components may be used either by themselves or in combination with other conductive materials such as the previously discussed vacuum deposited light metal (having an optical density of 0.15 - 0.40), Indium/Tin Oxide (having resistance between 25 ohms to 400 ohms) or other such conductive layer that will allow for the passage of the light generated by the EL device. As an alternative to the conductive salts such as CYSTAT discussed above, other salt like conductive polymers may also be employed. While one charged portion of the conductive polymer (e.g., the cationic portion) is of fairly large molecular weight, the other charge center is typically of low molecular weight.

Further techniques for creating graphic electroluminescent displays may involve masking out with a stencil the graphic items, or even cutting out the graphics from an electroluminescent composite. The desired graphics may then be affixed to a conductor. Since such devices are relatively insensitive to water vapor, they may be used in environments that were previously considered too hostile to electroluminescent devices, such as billboards, sides of busses, airport runways, and floors of retail stores.

Further, such devices may be employed on original documents for security purposes. Such devices may be transferred onto the original document. The device may be designed to provide luminescence only when placed under an alternating current source of a specific frequency.

Those skilled in the art will appreciate that numerous modifications and variations may be made to the above disclosed embodiments without departing from the scope of the invention.

**Claims**

1. A water vapor permeable composite for use in electroluminescent devices, wherein said composite comprise a substrate (10) comprising:

a polymeric material (14) having a first surface energy; and a phosphorescent material (12) dispersed within at least a portion of said polymeric material (14), said phosphorescent material (12) having a second surface energy; **characterized in that**;
said first and second surface energies each being between 0.032 N/m (32 dynes/cm) and 0.046 N/m (46 dynes/cm); and said polymeric material (14) having a moisture vapor transmission rate of at least $0.000394g/m^2$ (1 gram mil/100 sq. inches) for a 24 hour period at 38 °C (100° F).

2. The composite as claimed in claim 1, wherein said substrate (10) has an overall moisture vapor transmission rate of at least $0.000394g/m^2$ (1 gram mil/100 sq. inches) for a 24 hour period at 38 °C (100° F).

3. The composite as claimed in claim 2, wherein said polymeric material (14) includes at least one of an acrylic, amorphous polyesters, a vinyl, and vinyl acetate copolymers.

4. The composite as claimed in any one of claims 1 to 3, wherein said composite includes a protective layer (26).

5. The composite as claimed in claim 4, wherein said protective layer (26) is clear.

6. The composite as claimed in claim 4, wherein said protective layer (26) has a surface energy of 0.032 N/m (32 dynes/cm) and 0.046 N/m (46 dynes/cm),

7. The composite as claimed in claim 6, wherein said protective layer (26) has a moisture vapor transmission rate of at least $0.000394 g/m^2$ (1 gram mil/100 sq. inches) for a 24 hour period at 38 °C (100 °F).

8. The composite as claimed in claim 7, wherein said protective layer (26) includes a coating of an electrically conductive material (24) on one side thereof.

9. An electroluminescent device comprising a water vapor permeable composite according to any of the previous claims, wherein no two successive polymer layers having a moisture vapor transmission rate that differs by more than $0.002362g/m^2$ (6 gram mils / 100 sq. inches) for a 24 hour period at 38 °C (100° F), said electroluminescent device having no layer with a moisture vapor transmission rate (MVTR) of less than $0.000394 g/m^2/24$ hrs (1 gram mil/100sq. inches/24 hrs).

10. An electroluminescent device comprising a water vapor permeable composite according to any of claims 1-8, which comprises a pair of conductive layers (22, 24) on either side of said composite and a protective layer (26).

11. An electroluminescent device according to claim 10, wherein the surface energies of each of the protective layer (26) and conductive layers (22, 24) are between 0.032 N/m (32 dynes/cm) and 0.046 N/m (46 dynes/cm).

12. An electroluminescent device according to claims 10 or 11, wherein the difference between surface energies of each pair of adjoining layers is less than $0.002362 g/m^2$ (6 gram mil/ 100 sq, inches for a 24 hour period at 38 °C (100° F).

13. An electroluminescent device according to claim 11, wherein the composite comprises one or two dielectric layers (28, 30) between the substrate and either or both of the conductive layers (22, 24).

**14.** The composite as claimed in any one of claims 1 to 3, wherein it comprises an electrical conductive material (18A, 18B) on at least one side of said polymeric material (14).

**15.** The composite as claimed in claim 14, wherein said electrical conductive material (18A, 18B) surface energy is between 0.032 N/m (32 dynes/cm) and 0.046 N/m (46 dynes/cm).

**16.** The composite as claimed in claim 15, wherein said electrical conductive material (18A, 18B) has a moisture vapor transmission rate of at least 0.000394 g/m$^2$(1 gram mil/100 sq. inches) for a 24 hour period at 38 °C (100° F).

**17.** The composite as claimed in claim 16, wherein said composite includes a protective layer (16).

**18.** The composite as claimed in claim 17, wherein said protective layer (16) is clear.

**19.** The composite as claimed in claim 17, wherein said protective layer (16) has a moisture vapor transmission rate of at least 0.000394 g/m$^2$(1 gram mil/ 100 sq. inches) for a 24 hour period at 38 °C (100° F).

**20.** The composite as claimed in claim 19, wherein said composite further includes a releasable layer (36) and a carrier layer (38) such that the carrier layer is removable from the polymeric material and the conductive material following application of the composite to a receiving surface (46).

**21.** The composite as claimed in claim 20, wherein said composite further includes a bonding adhesive (40) on a surface of said composite for adhering the composite to a conductive surface (42, 44).

**22.** The composite as claimed in claim 21, wherein said bonding adhesive (40) comprises a salt.

**23.** A method of using a water permeable electroluminescent device, **characterized by**:

applying an alternating electric field through a composite of a polymeric material (14) and a conductive material (18A, 18B); and
permitting water vapor to pass through said composite.

**24.** The method as in claim 23, wherein said composite further includes a phosphorescent material (12) dispersed within said polymeric material (14).

**25.** The method as in claim 23, wherein said composite further includes a protective layer (26) on at least one side of said composite and said step of permitting water vapor to pass through said composite includes permitting water vapor to pass through said protective layer (26).


**Patentansprüche**

**1.** Wasserdampfdurchlässiger Verbundwerkstoff zur Verwendung in elektrolumineszierenden Bauelementen, wobei der Verbundwerkstoff ein Substrat (10) umfasst, das folgendes umfasst:

ein polymeres Material (14) mit einer ersten Oberfläehenenergie; und ein phosphoreszierendes Material (12), das mindestens innerhalb eines Teils des polymeren Materials (14) dispergiert ist, wobei das phosphoreszierende Material (12) eine zweite Oberflächenenergie aufweist;
**dadurch gekennzeichnet, dass** die erste und zweite Oberflächenenergie jeweils zwischen 0,032 N/m (32 dyn/cm) und 0,046 N/m (46 dyn/cm) beträgt; und das polymere Material (14) eine Wasserdampf-Durchlässigkeitsrate von mindestens 0,000394 g/m$^2$ (1 gram mil/100 sq. inches) für eine Zeitspanne von 24 Stunden bei 38 °C (100 °F) aufweiset.

**2.** Verbundwerkstoff nach Anspruch 1, wobei das Substrat (10) eine gesamte Wasserdampf-Durchlässigkeitsrate von mindestens 0,000394 g/m$^2$ (1 gram mil/100 sq. inches) für eine Zeitspanne von 24 Stunden bei 38 °C (100 °F) aufweist.

**3.** Verbundwerkstoff nach Anspruch 2, wobei das polymere Material (14) mindestens einen der Bestandteile Acrylharz, amorphe Polyester, Vinylharz und Vinylacetat-Copolymere umfasst.

4. Verbundwerkstoff nach einem der Ansprüche 1 bis 3, wobei der Verbundwerkstoff eine Schutzschicht (26) umfasst.

5. Verbundwerkstoff nach Anspruch 4, wobei die Schutzschicht (26) klar ist.

6. Verbundwerkstoff nach Anspruch 4, wobei die Schutzschicht (26) eine Oberflächenenergie von 0,032 N/m (32 dyn/cm) bis 0,046 N/m (46 dyn/cm) aufweist.

7. Verbundwerkstoff nach Anspruch 6, wobei die Schutzschicht (26) eine Wasserdampf-Durchlässigkeitsrate von mindestens 0,000394 g/m$^2$ (1 gram mil/100 sq. inches) für eine Zeitspanne von 24 Stunden bei 38 °C (100 °F) aufweist.

8. Verbundwerkstoff nach Anspruch 7, wobei die Schutzschicht (26) auf einer Seite einen Überzug mit einem elektrisch leitenden Material (24) umfasst.

9. Elektrolumineszierendes Bauelement, umfassend einen Wasserdampfdurchlässigen Verbundwerkstoff nach einem der vorstehenden Ansprüche, wobei keine zwei aufeineinanderfolgenden Polymerschichten Wasserdampf-Durchlässigkeitsraten aufweisen, die sich voneinander um mehr als 0,002362 g/m$^2$ (6 gram mil/100 sq. inches) für eine Zeitspanne von 24 Stunden bei 38 °C (100 °F) unterscheiden, wobei das elektrolumineszierende Bauelement keine Schicht mit einer Wasserdampf-Durchlässigkeitsrate (MVTR) von weniger als 0,000394 g/m$^2$/24 h (1 gram mil/100 sq. inches/24 h) aufweist.

10. Elektrolumineszierendes Bauelement, umfassend einen Wasser-dampfdurchlässigen Verbundwerkstoff nach einem der Ansprüche 1 bis 8, der ein Paar leitender Schichten (22, 24) auf beiden Seiten des Verbundwerkstoffes sowie eine Schutzschicht (26) umfasst.

11. Elektrolumineszierendes Bauelement nach Anspruch 10, wobei die Oberflächenenergien jeder der Schutzschichten (26) und der leitendem Schichten (22, 24) zwischen 0,032 N/m (32 dyn/cm) und 0,046 N/m (46 dyn/cm) betragen.

12. Elektrolumineszierendes Bauelement nach Anspruch 10 oder 11, wobei die Differenz zwischen den Wasserdampf-Durchlässigkeitsraten eines jeden Paars von benachbarten Schichten weniger als 0,002362 g/m$^2$ (6 gram mil/100 sq. inches) für eine Zeitspanne von 24 Stunden bei 38 °C (100 °F) beträgt.

13. Elektrolumineszierendes Bauelement nach Anspruch 11, wobei der Verbundwerkstoff eine oder zwei dielektrische Schichten (28, 30) zwischen dem Substrat und einer oder beiden leitenden Schichten (22, 24) umfasst.

14. Verbundwerkstoff nach einem der Ansprüche 1 bis 3, der ein elektrisch leitendes Material (18A, 18B) auf mindestens einer Seite des polymeren Materials (14) umfasst.

15. Verbundwerkstoff nach Anspruch 14, wobei das elektrisch leitende Material (18A, 18B) eine Oberflächenenergie zwischen 0,032 N/m (32 dyn/cm) und 0,046 N/m (46 dyn/cm) aufweist.

16. Verbundwerkstoff nach Anspruch 15, wobei das elektrisch leitende Material (18A, 18B) eine Wasserdampf-Durchlässigkeitsrate von mindestens 0,000394 g/m$^2$ (1 gram mil/100 sq. inches) für eine Zeitspanne von 24 Stunden bei 38 °C (100 °F) aufweist.

17. Verbundwerkstoff nach Anspruch 16, wobei der Verbundwerkstoff eine Schutzschicht (16) umfasst.

18. Verbundwerkstoff nach Anspruch 17, wobei die Schutzschicht (16) klar ist.

19. Verbundwerkstoff nach Anspruch 17, wobei die Schutzschicht (16) eine Wasserdampf-Durchlässigkeitsrate von mindestens 0,000394 g/m$^2$ (1 gram mil/100 sq. inches) für eine Zeitspanne von 24 Stunden bei 38 °C (100 °F) aufweist.

20. Verbundwerkstoff nach Anspruch 19, wobei der Verbundwerkstoff ferner eine lösbare Schicht (36) und eine Trägerschicht (38) in der Weise umfasst, dass die Trägerschicht vom polymeren Material und dem leitenden Material nach Aufbringen des Verbundwerkstoffes auf eine Empfangsoberfläche (46) entfernbar ist.

21. Verbundwerkstoff nach Anspruch 20, wobei der Verbundwerkstoff ferner einen Klebstoff (40) auf einer Oberfläche des Verbundwerkstoffes umfasst, um den Verbundwerkstoff auf eine leitende Oberfläche (42, 44) zu kleben.

**22.** Verbundwerkstoff nach Anspruch 21, wobei der Klebstoff (40) ein Salz umfasst.

**23.** Verfahren zur Verwendung eines wasserdurchlässigen elektrolumineszierenden Bauelements **gekennzeichnet durch**:

Anlegen eines elektrischen Wechselstromfelds an einen Verbundwerkstoff aus einem polymeren Material (14) und einem leitenden Material (18A, 18B); und
Ermöglichen des Durchtritts von Wasserdampf **durch** den Verbundwerkstoff.

**24.** Verfahren nach Anspruch 23, wobei der Verbundwerkstoff ferner ein phosphoreszierendes Material (12) umfasst, das im polymeren Material (14) dispergiert ist.

**25.** Verfahren nach Anspruch 23, wobei der Verbundwerkstoff ferner eine Schutzschicht (26) auf mindestens einer Seite des Verbundwerkstoffes umfasst und die Stufe der Ermöglichung des Durchtritts von Wasserdampf durch den Verbundwerkstoff die Ermöglichung des Durchtritts von Wasserdampf durch die Schutzschicht (26) umfasst

**Revendications**

**1.** Composite perméable à la vapeur d'eau destiné à être utilisé dans des dispositifs électroluminescents, dans lequel ledit composite comprend un substrat (10), comprenant :

un matériau polymère (14) possédant une première énergie de surface ; et un matériau phosphorescent (12) dispersé à l'intérieur d'au moins une partie dudit matériau matériau polymère (14), ledit matériau phosphorescent (12) possédant une seconde énergie de surface;
**caractérisé en ce que** :

lesdites première et seconde énergies de surface sont chacune entre 0,032 N/m (32 dynes/cm) et 0,046 N/m (46 dynes/cm) ; et ledit matériau matériau polymère (14) possède un taux de transmission de vapeur d'eau d'au moins 0,000394 g/m$^2$ (1 millième de gramme/100 pouces carrés) pendant une période de 24 heures à 38 °C (100° F).

**2.** Composite selon la revendication 1, dans lequel ledit substrat (10) possède un taux de transmission de vapeur d'eau d'au moins 0,000394 g/m$^2$ (1 millième de gramme/100 pouces carrés) pendant une période de 24 heures à 38 °C (100° F).

**3.** Composite selon la revendication 2, dans lequel ledit matériau matériau polymère (14) comprend au moins un parmi un acrylique, des polyesters amorphes, un vinyle, et des copolymères d'acétate de vinyle.

**4.** Composite selon une quelconque des revendications 1 à 3, dans lequel ledit composite comprend une couche de protection (26).

**5.** Composite selon la revendication 4, dans lequel ladite couche de protection (26) est transparente.

**6.** Composite selon la revendication 4, dans lequel ladite couche de protection (26) possède une énergie de surface de 0,032 N/m (32 dynes/cm) et 0,046 N/m (46 dynes/cm).

**7.** The composite selon la revendication 6, dans lequel ladite couche de protection (26) possède un taux de transmission de vapeur d'eau d'au moins 0,000394 g/m$^2$ (1 millième de gamme/100 pouces carrés) pendant une période de 24 heures à 38 °C (100°F).

**8.** Composite selon la revendication 7, dans lequel ladite couche de protection (26) comprend un revêtement d'un matériau électro-conducteur (24) sur un côté de celle-ci.

**9.** Dispositif électroluminescent comprenant un composite perméable à la vapeur d'eau selon une quelconque des revendications précédentes, dans lequel il n'y pas deux couches polymères successives qui possède un taux de transmission de vapeur d'eau qui diffère de plus de 0,002362g/m$^2$ (6 millièmes de gramme/100 pouces carrés) pendant une période de 24 heures à 3 8 °C (100° F), ledit dispositif électroluminescent ne possédant aucune couche avec un taux de transmission de vapeur d'eau (MVTR) intérieur à 0,000394 g/m$^2$/24 heures (1 millième de gramme/100 pouces carrés/24 heures).

10. Dispositif électroluminescent comprenant un composite perméable à la vapeur d'eau selon une quelconque des revendications 1 à 8, qui comprend une paire de couches conductrices (22, 24) de chaque côté dudit composite et une couche de protection (26).

11. Dispositif électroluminescent selon la revendication 10, dans lequel les énergies de surface de chacune parmi la couche de protection (26) et les couches conductrices (22, 24) sont entre 0,032 N/m (32 dynes/cm) et 0,046 N/m (46 dynes/cm).

12. Dispositif électroluminescent selon les revendications 10 ou 11, dans lequel la différence entre des énergies de surface de chaque paire de couches contiguës est inférieure à 0,002362 g/m$^2$ (6 millième de gramme/100 pouces carrés) pendant une période de 24 heures à 38 °C (100° F).

13. Dispositif électroluminescent selon la revendication 11, dans lequel le composite comprend une ou deux couches diélectriques (28, 30) entre le substrat et l'une ou les deux des couches conductrices (22, 24).

14. Composite selon une quelconque des revendications 1 à 3, dans lequel il comprend un matériau conducteur électrique (18A, 18B) sur au moins un côté dudit matériau matériau polymère (14).

15. Composite selon la revendication 14, dans lequel l'énergie de surface dudit matériau conducteur électrique (18A, 18B) est entre 0,032 N/m (32 dynes/cm) et 0,046 N/m (46 dynes/cm).

16. Composite selon la revendication 15, dans lequel ledit matériau conducteur électrique (18A, 18B) possède un taux de transmission de vapeur d'eau d'au moins 0,000394 g/m$^2$ (1 millième de gramme/100 pouces carrés) pendant une période de 24 heures à 38 °C (100° F).

17. Composite selon la revendication 16, dans lequel ledit composite comprend une couche de protection (16).

18. Composite selon la revendication 17, dans lequel ladite couche de protection (16) est transparente.

19. Composite selon la revendication 17, dans lequel ladite couche de protection (16) possède un taux de transmission de vapeur d'eau d'au moins 0,000394 g/m$^2$ (1 millième de gramme/100 pouces carrés) pendant une période de 24 heures à 38 °C (100° F).

20. Composite selon la revendication 19, dans lequel ledit composite comprend en outre une couche décollable (36) et une couche de support (38) de sorte que la couche de support soit amovible du matériau matériau polymère et le matériau conducteur suivant l'application du composite sur une surface de réception (46).

21. Composite selon la revendication 20, dans lequel ledit composite comprend en outre un adhésif liant (40) sur une surface dudit composite pour faire adhérer le composite à une surface conductrice (42, 44).

22. Composite selon la revendication 21, dans lequel ledit adhésif liant (40) possède un sel.

23. Procédé d'utilisation d'un Dispositif électroluminescent perméable à l'eau, **caractérisé par** :

   l'application d'un champ électrique alternatif à travers un composite d'un matériau matériau polymère (14) et un matériau conducteur (18A, 18B) ; et
   l'autorisation du passage de la vapeur d'eau à travers ledit composite

24. Procédé selon la revendication 23, dans lequel ledit composite comprend en outre un matériau phosphorescent (12) dispersé à l'intérieur dudit matériau polymère (14).

25. Procédé selon la revendication 23, dans lequel ledit composite comprend en outre une couche de protection (26) sur au moins un côté dudit composite et ladite étape de l'autorisation du passage de vapeur d'eau à travers ledit composite comprend l'autorisation du passage de la vapeur d'eau à travers ladite couche de protection (26).

FIG. 1

FIG. 2

FIG. 3

FIG. 4

FIG. 5

FIG. 6

FIG. 7

FIG. 8

**EP 1 497 392 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 37137502 P
- US 60404420 P
- US 6207077 B
- US 6198216 B
- US 4687968 A